(19) Europäisches Patentamt
European Patent Office
Office européen des brevets

(11) **EP 3 246 770 B1**

(12) **EUROPEAN PATENT SPECIFICATION**

(45) Date of publication and mention
of the grant of the patent:
**17.02.2021 Bulletin 2021/07**

(51) Int Cl.:
***G06F 16/00*** (2019.01)   ***G05B 19/04*** (2006.01)

(21) Application number: **15877577.5**

(86) International application number:
**PCT/CN2015/083316**

(22) Date of filing: **03.07.2015**

(87) International publication number:
**WO 2016/112662 (21.07.2016 Gazette 2016/29)**

(54) **DIGITAL SIGNAL PROCESSOR, DATA INTERACTION AND CONVERSION DEVICE AND METHOD, AND STORAGE MEDIUM**

DIGITALER SIGNALPROZESSOR, DATENINTERAKTION UND UMWANDLUNGSVORRICHTUNG UND -VERFAHREN SOWIE SPEICHERMEDIUM

PROCESSEUR DE SIGNAL NUMÉRIQUE, DISPOSITIF ET PROCÉDÉ D'INTERACTION ET DE CONVERSION DE DONNÉES, ET SUPPORT DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.01.2015 CN 201510014406**

(43) Date of publication of application:
**22.11.2017 Bulletin 2017/47**

(73) Proprietor: **Sanechips Technology Co., Ltd.
Shenzhen, Guangdong 518055 (CN)**

(72) Inventor: **ZHANG, Junling
Shenzhen, Guangdong 518085 (CN)**

(74) Representative: **Gevers Patents
Intellectual Property House
Holidaystraat 5
1831 Diegem (BE)**

(56) References cited:
**CN-A- 101 945 269      CN-A- 103 389 991
CN-A- 103 389 991      CN-Y- 2 730 060
CN-Y- 2 730 060         JP-A- 2002 354 056**

• **HASELMAN M ET AL: "A Comparison of Floating Point and Logarithmic Number Systems for FPGAs", FIELD-PROGRAMMABLE CUSTOM COMPUTING MACHINES, 2005. FCCM 2005. 13TH AN NUAL IEEE SYMPOSIUM ON NAPA, CA, USA 18-20 APRIL 2005, PISCATAWAY, NJ, USA,IEEE, 18 April 2005 (2005-04-18), pages 181-190, XP010841269, DOI: 10.1109/FCCM.2005.6 ISBN: 978-0-7695-2445-0**

**Description**

TECHNICAL FIELD

The present disclosure relates to the technology of Digital Signal Processors (DSPs), and in particular to a DSP, a device and method for data interaction and conversion, and a storage medium.

BACKGROUND

With the development of microelectronic technologies and computer technologies, DSPs have been widely applied to many fields such as communication, signal and information processing, automatic control, aeronautics and astronautics, medical, and household appliances. The DSP may be divided into a common DSP and a dedicated DSP in terms of use. The dedicated DSP is designed for specific DSP operations, and is more suitable for special operations, such as digital filtering, convolution and so on.

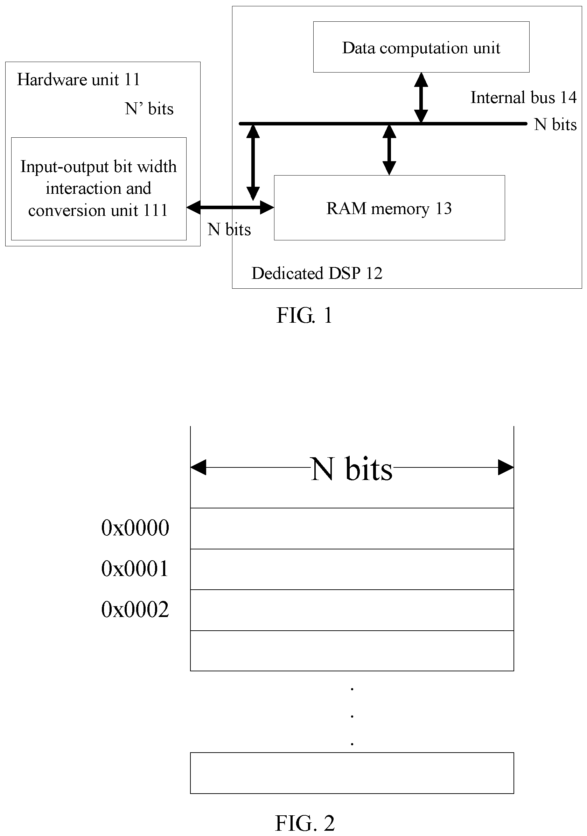

FIG. 1 is a traditional device in which a hardware unit performs data interaction and conversion with a dedicated DSP. As shown in FIG. 1, in the hardware unit 11, the bit width is N' bits, N' being an integer. An input-output bit width interaction and conversion unit 111 in the hardware unit 11 converts data having a bit width of N' bits into data having a bit width of N bits, which is then transmitted on an internal bus 14 of the dedicated DSP 12 in the form of a bit width of N bits; or, the converted data is subjected to direct data interaction with a Random Access Memory (RAM) 13 and the data is stored in the RAM 13 in the form of a bit width of N bits. The data structure of the bit width of N bits may refer to the traditional RAM data structure as shown in FIG. 2.

Thus, it can be seen that in the above traditional device in which a hardware unit performs data interaction and conversion with a dedicated DSP, the area occupied by the RAM memory in the dedicated DSP increases to N/N' times with respect to the area before data are converted. Meanwhile, considering that the area of the RAM memory generally occupies more than 50% of the area of the dedicated DSP, thus, in the above traditional device for data interaction and conversion, the area of the DSP increases as the increase of area of the RAM memory, thereby causing an increase in cost.

Since dedicated DSPs with lower cost are still selected to be used in many application fields at present, how to save the area of the dedicated DSP has become a technical problem to be solved in related art.

HASELMAN M ET AL: "A Comparison of Floating Point and Logarithmic Number Systems for FPGAs", FIELD-PROGRAMMABLE CUSTOM COMPUTIGN MACHINES, 2005, discloses that the floating point number is converted into the logarithmic number.

SUMMARY

In view of this, the embodiments of the present disclosure provide a DSP, a device and method for data interaction and conversion, and a storage medium, which can solve the problem that the memory area of a dedicated DSP is too large.

Accordingly, the technical scheme of the embodiments of the present disclosure is realized as follows.

An embodiment of the present disclosure provides a device for data interaction and conversion, as defined in claim 1.

An embodiment of the present disclosure further provides a method for data interaction and conversion, as defined in claim 6.

Advantageous embodiments are defined in dependent claims 2-5, 7 and 8.

An embodiment of the present disclosure further provides a computer storage medium, which has stored a computer program for executing the above method for data interaction and conversion according to the embodiment of the present disclosure.

For the DSP, the device and method for data interaction and conversion, and the storage medium provided by the embodiments of the present disclosure, the hardware unit and the dedicated DSP perform interaction based on first mode data. For the dedicated DSP, the first mode data coming from the hardware unit is converted into second mode data which has different at least one of bit width and format from the first mode data, and the second mode data is converted into third mode data which has different bit width from the second mode data, through the two data conversion units respectively. Or, vice versa, third mode data returned after computation is converted into second mode data which has different bit width from the third mode data, and the second mode data is converted into first mode data which has different at least one of bit width and format from the second mode data and is sent to the hardware unit. Thus, according to the embodiments of the present disclosure, the first mode data is converted twice inside the dedicated DSP, and the second mode data converted intermediately is then stored, so that the memory area occupied by the data stored in the data storage unit is reduced relatively, thus the area occupied by the dedicated DSP is reduced too, and the problem that how to save the cost of the dedicated DSP in existing technologies is solved.

BRIEF DESCRIPTION OF DRAWINGS

Fig. 1 is a structure diagram of a traditional device in which a hardware unit performs data interaction and conversion with a dedicated DSP;
Fig. 2 is a schematic diagram of data structure in a traditional RAM memory;
Fig. 3 is a structure diagram of a DSP provided by an embodiment of the present disclosure;
Fig. 4 is a structure diagram of a device for data interaction and conversion of an embodiment of the present disclosure;
Fig. 5 is an implementation flowchart of a method for data interaction and conversion of an embodiment of the present disclosure; and
Fig. 6 is a schematic diagram of data structure of a data storage unit in an embodiment of the present disclosure.

DETAILED DESCRIPTION

In the embodiments of the present disclosure, interaction is carried out between a hardware unit and a dedicated DSP based on first mode data. In the dedicated DSP, the first mode data coming from the hardware unit is converted into second mode data which has different at least one of bit width and format from the first mode data, the second mode data is converted into third mode data which has different bit width from the second mode data, and the third mode data is subjected to data computation, through two data conversion units respectively. Or, vice versa, third mode data returned after computation is converted into second mode data which has different bit width from the third mode data, and the second mode data is converted into first mode data which has different at least one of bit width and format from the second mode data and is sent to the hardware unit.

The present disclosure is described below in further detail in conjunction with accompanying drawings and specific embodiments.

Embodiment 1

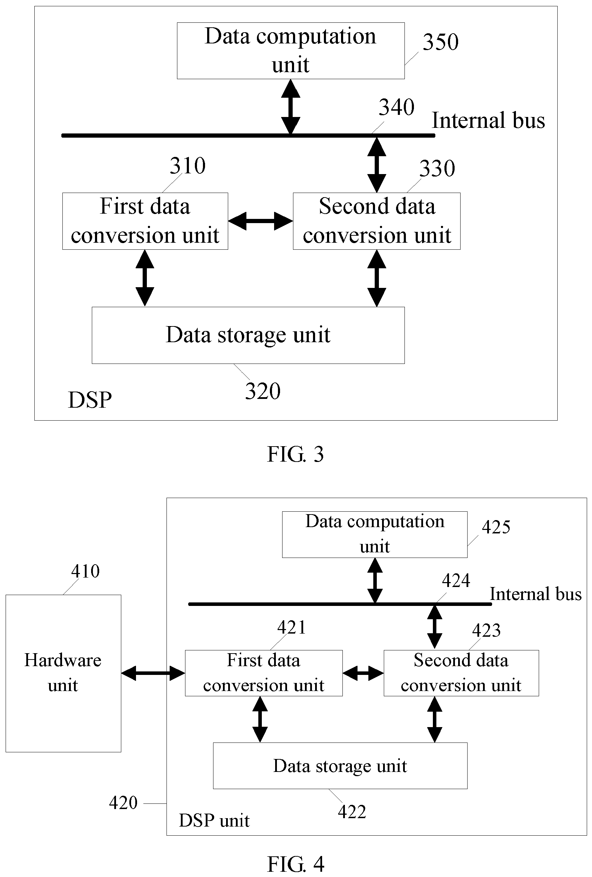

Fig. 3 is a structure diagram of a DSP provided by an embodiment of the present disclosure, wherein the DSP is a dedicated DSP. As shown in Fig. 3, the DSP includes: a first data conversion unit 310, a second data conversion unit 330, an internal bus 340 and a data computation unit 350.

The first data conversion unit 310 may be arranged to receive first mode data from a hardware unit and convert the first mode data into second mode data which has different at least one of bit width and format from the first mode data. The first data conversion unit 310 may be also arranged to convert second mode data into first mode data which has different at least one of bit width and format from the second mode data.

The second data conversion unit 330 may be arranged to receive the second mode data from the first data conversion unit 310, convert the second mode data into third mode data which has different bit width from the second mode data and send the third mode data to the internal bus 340. The second data conversion unit 330 may be also arranged to receive third mode data from the internal bus 340, convert the third mode data into the second mode data which has different bit width from the third mode data.

The internal bus 340 may be arranged to exchange the third mode data with the second data conversion unit 330 and the data computation unit 350.

The data computation unit 350 may be arranged to receive the third mode data from the internal bus 340 and perform data computation on the third mode data. The data computation unit 350 may be also arranged to return the computed third mode data to the internal bus 340.

The first data conversion unit 310 may be arranged to convert the first mode data into the second mode data which has different at least one of bit width and format from the first mode data, including: the first data conversion unit 310 is arranged to convert the first mode data into the second mode data which has a different bit width from the first mode data, or, convert the first mode data into the second mode data which has a different format from the first mode data, or, convert the first mode data into the second mode data which has different bit width and format from the first mode data.

The first data conversion unit 310 may be arranged to convert the second mode data into the first mode data which has different at least one of bit width and format from the second mode data, including: the first data conversion unit 310 is arranged to convert the second mode data into the first mode data which has a different bit width from the second mode data, or, convert the second mode data into the first mode data which has a different format from the second mode data, or, convert the second mode data into the first mode data which has different bit width and format from the second mode data.

The bit width of the second mode data is greater than or equal to the bit width of the first mode data.

The second data conversion unit 330 may be arranged to convert the second mode data into the third mode data which has different at least one of bit width and format from the second mode data, including: the second data conversion unit 330 is arranged to convert the second mode data into the third mode data which has a different bit width from the second mode data, or, convert the second mode data into the third mode data which has a different format from the second mode data, or, convert the second mode data into the third mode data which has different bit width and format from the second mode data.

The second data conversion unit 330 may be arranged to convert the third mode data into the second mode data which has different at least one of bit width and format from the third mode data, including: the second data conversion unit 330 is arranged to convert the third mode data into the second mode data which has a different bit width from the third mode data, or, convert the third mode data into the second mode data which has a different format from the third mode data, or, convert the third mode data into the second mode data which has different bit width and format from the third mode data.

The bit width of the third mode data is greater than the bit width of the second mode data.

The DSP unit further includes a storage unit 320, which is arranged to store the second mode data converted from the first mode data.

Correspondingly, the second data conversion unit 330 is arranged to receive the second mode data from the first data conversion unit 310, or acquire the second mode data from the data storage unit 320.

Here, the data storage unit 320 may be an RAM.

Embodiment 2

Fig. 4 is a structure diagram of a device for data interaction and conversion of an embodiment of the present disclosure. The device is implemented based on a dedicated DSP. The device includes: a hardware unit 410 and a dedicated DSP 420.

The hardware unit 410 is arranged to perform first mode data interaction with the dedicated DSP unit 420.

The dedicated DSP unit 420 may be arranged to: receive first mode data from the hardware unit 410, and convert the first mode data into second mode data which has different at least one of bit width and format from the first mode data; convert the second mode data into third mode data which has different bit width from the second mode data, and perform data computation on the third mode data. The dedicated DSP unit 420 may also be arranged to: convert third mode data returned after computation into second mode data which has different bit width from the third mode data; and convert the second mode data into first mode data which has different at least one of bit width and format from the second mode data, and send the first mode data to the hardware unit 410.

The dedicated DSP unit 420 may include: a first data conversion unit 421, a second data conversion unit 423, an internal bus 424 and a data computation unit 425.

The first data conversion unit 421 may be arranged to receive first mode data from the hardware unit 410 and convert the first mode data into second mode data which has different at least one of bit width and format from the first mode data. The first data conversion unit 421 may be also arranged to convert second mode data into first mode data which has different at least one of bit width and format from the second mode data;

The second data conversion unit 423 may be arranged to receive the second mode data from the first data conversion unit 421, convert the second mode data into third mode data which has different bit width from the second mode data and send the third mode data to the internal bus 424. The second data conversion unit 423 may be also arranged to receive third mode data from the internal bus 424, convert the third mode data into second mode data which has different bit width from the third mode data.

The internal bus 424 may be arranged to exchange the third mode data with the second data conversion unit 423 and the data computation unit 425.

The data computation unit 425 may be arranged to receive the third mode data from the internal bus 424 and perform data computation on the third mode data. The data computation unit 425 may be also arranged to return the computed third mode data to the internal bus 424.

The dedicated DSP unit 420 may be arranged to convert the first mode data into the second mode data which has different at least one of bit width and format from the first mode data, including: the dedicated DSP unit 420 is arranged to convert the first mode data into the second mode data which has a different bit width from the first mode data, or, convert the first mode data into the second mode data which has a different format from the first mode data, or, convert the first mode data into the second mode data which has different bit width and format from the first mode data.

The dedicated DSP unit 420 may be arranged to convert the second mode data into the first mode data which has different at least one of bit width and format from the second mode data, including: the dedicated DSP unit 420 is arranged to convert the second mode data into the first mode data which has a different bit width from the second mode data, or, convert the second mode data into the first mode data which has a different format from the second mode data, or, convert the second mode data into the first mode data which has different bit width and format from the second mode data.

The bit width of the second mode data is greater than or equal to the bit width of the first mode data.

The dedicated DSP unit 420 may be arranged to convert the second mode data into the third mode data which has different bit width from the second mode data, including: the dedicated DSP unit 420 is arranged to convert the second mode data into the third mode data which has a different bit width from the second mode data, or, convert the second mode data into the third mode data which has different bit width and format from the second mode data.

The dedicated DSP unit 420 may be arranged to convert the third mode data into the second mode data which has different bit width from the third mode data, including: the dedicated DSP unit 420 is arranged to convert the third mode data into the second mode data which has a different bit width from the third mode data, or, convert the third mode data into the second mode data which has different bit width and format from the third mode data.

The bit width of the third mode data is greater than the bit width of the second mode data.

The dedicated DSP unit may further include a storage unit 422, which is arranged to store the second mode data converted from the first mode data;

Correspondingly, the second data conversion unit 423 is arranged to receive the second mode data from the first data conversion unit 421, or acquire the second mode data from the data storage unit 422.

Here, the data storage unit 422 may be an RAM.


Embodiment 3

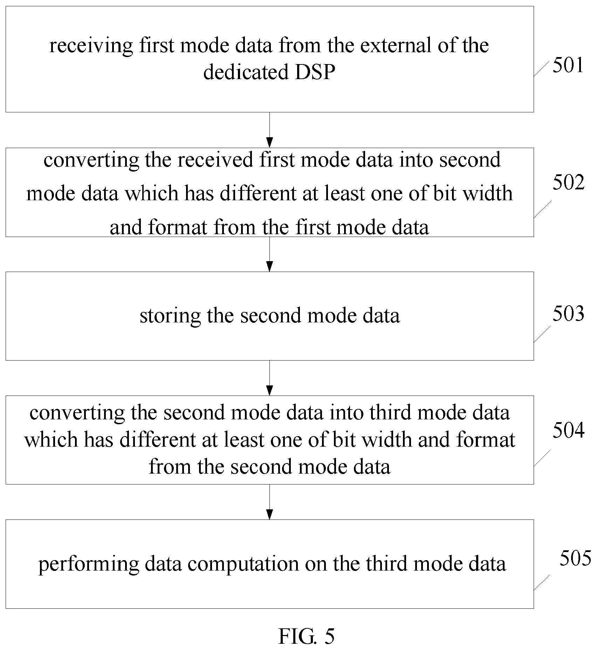

Fig. 5 is an implementation flowchart of a method for data interaction and conversion of an embodiment of the present disclosure. The method is implemented based on a dedicated DSP. As shown in Fig 5, in conjunction with the above embodiment and Fig. 4, the method includes the steps below.

Step 501: first mode data is received from the external of the dedicated DSP. Here, interaction is carried out between the hardware unit 410 and the first data conversion unit 421 of the dedicated DSP unit 420 based on the first mode data.

Step 502: the received first mode data is converted into second mode data which has different at least one of bit width and format from the first mode data.

In Step 502, the conversion refers to the conversion of a data bit width, or, the conversion of a data format, or, the conversion of both a data bit width and a format. The at least one of bit width and format of the received first mode data may be converted into a different at least one of bit width and format by the first data conversion unit 421, the converted data being the second mode data.

Here, converting the at least one of bit width and format of the first mode data into a different at least one of bit width and format is: converting the original bit width of N' bits of the first mode data into a first bit width of N" bits, N' and N" being integers; or, converting the original format of the first mode data into a first format, for example, the original format is an integer, the first format is a block floating-point number; or, converting the original bit width of N' bits and the original format of the first mode data into the first bit width of N" bits and the first format respectively, N' and N" being integers.

In the above embodiment, the first bit width of N" bits of the second mode data is greater than or equal to the original bit width of N' bits of the first mode data, for example, when N' is 10, N" may be 12; thus, the above condition meets N">=N'.

That is to say, the first mode data may be converted into the second mode data through three data conversion modes in the first data conversion unit, that is, bit width conversion only, data format conversion only, both bit width conversion and data format conversion.

Step 503: the second mode data is stored.

Here, the converted second mode data is stored by the data storage unit 422.

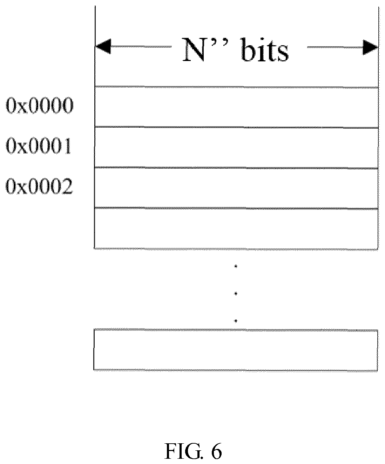

Fig. 6 is a schematic diagram of data structure of a data storage unit in an embodiment of the present disclosure.

In Step 502, under the condition that the original bit width of N' bits of the first mode data is converted into the first bit width of N" bits, as shown in Fig. 6, the bit width of the data storage unit is N" bits.

In actual application, this step may be omitted.

Step 504: the second mode data is converted into third mode data which has different bit width from the second mode data.

In Step 504, the at least one of bit width and format of the second mode data may be converted into a different at least one of bit width and format by the second data conversion unit 423, the converted data being the third mode data.

Here, converting the at least one of bit width and format of the second mode data into a different at least one of bit width and format is: converting the first bit width of N" bits of the second mode data into a second bit width of N bits, N" and N being integers or, converting the first bit width of N" bits and the first format of the second mode data into the second bit width of N bits and the second format respectively, N" and N being integers.

Here, the second bit width of N bits of the third mode data is greater than the first bit width of N" bits of the second mode data.

In the above process, the value of N" is between N and N', N and N' meet:

$$N = \left\lceil \frac{N'}{8} \right\rceil \times 8, \left\lceil \frac{N'}{8} \right\rceil \text{ being rounded up to an integer, N', N" and N being integers.}$$

For example, when N'=10, N"=12, N=16, thus, the above condition meets N>N".

That is to say, the second mode data may be converted into the third mode data through three data conversion modes in the second data conversion unit, that is, bit width conversion only, data format conversion only, both bit width conversion and data format conversion.

Step 505: data computation is performed on the third mode data.

The second data conversion unit 423 exchanges third mode data with the internal bus 424, the internal bus 424 exchanges the third mode data with the data computation unit 425. The data computation unit 425 performs data computation on the third mode data. Since the third mode data of the data computation unit 425 is not subjected to any conversion, the bit width and format of the third mode data are not changed.

In actual application, the method for data interaction and conversion of the embodiment of the present disclosure may include reverse operations of Step 501 to Step 505, including: converting third mode data returned after computation into second mode data which has different bit width from the third mode data; converting the second mode data into first mode data which has different at least one of bit width and format from the second mode data; then, sending the converted first mode data to the hardware unit external to the dedicated DSP.

From the above embodiments it can be seen that, in the modes of converting bit width only and converting bit width and data format simultaneously, the bit with of the second mode data in the data storage unit is N" bits. Relative to the bit width N of the RAM memory in the traditional device in which a hardware unit performs data interaction and conversion with a dedicated DSP, the value of N" is between N and N', N and N' meet $\left\lceil \frac{N'}{8} \right\rceil \times 8, \left\lceil \frac{N'}{8} \right\rceil$ being rounded up to an integer, N', N" and N being integers. Then, according to the embodiment of the present disclosure, the first mode data is converted twice inside the dedicated DSP, the bit width of the second mode data in the data storage unit is reduced relative to existing technologies. Therefore, the area of the data storage unit of the embodiment of the present disclosure is reduced, thus, the area occupied by the dedicated DSP of the embodiment of the present disclosure is reduced. Accordingly, according to the embodiment of the present disclosure, the cost of the dedicated DSP can be reduced, thereby achieving the effect of saving cost.

The dedicated DSP unit in the device for data interaction and conversion proposed in the embodiment of the present disclosure may be a DSP. The hardware unit may be a processor, or may be a specific logic circuit. In actual application, the processor may be a Central Processing Unit (CPU), a Micro Processor Unit (MPU) or a Field Programmable Gate Array (FPGA), etc.

In the embodiment of the present disclosure, if the above method for data interaction and conversion is implemented by a software function module and the software function module is sold or used as an independent product, then the software function module may be stored in a computer readable storage medium. Based on this understanding, the technical scheme of the embodiment of the present disclosure or the part making a contribution to the existing technology can be embodied by a software product. This computer software product is stored in a storage medium, including a number of instructions that enable a computer device (which might be a computer, a server or a network device, etc.) to execute part or the entirety of the method described in each embodiment of the present disclosure. The aforementioned storage medium includes: a USB flash disk, a mobile hard disk, a Read-Only Memory (ROM), a diskette or compact disc and various mediums capable of storing program codes. In this way, the embodiment of the present disclosure is not limited to any specific combination of hardware and software.

Correspondingly, an embodiment of the present disclosure further provides a computer storage medium, which stores a computer program that is arranged to execute the above method for data interaction and conversion as described in the embodiment of the present disclosure.

The above are embodiments of the present disclosure merely, and are not intended to limit the scope of protection of the present disclosure.

**Claims**

1. A device for data interaction and conversion, which is implemented based on a dedicated Digital Signal Processor, DSP, and comprises: a hardware unit (410) and a dedicated DSP unit (420), wherein
the hardware unit (410) is arranged to perform first mode data interaction with the dedicated DSP unit (420); and

the dedicated DSP unit is arranged to:

receive first mode data from the hardware unit, and convert the first mode data into second mode data which has different at least one of bit width or format from the first mode data;
store the second mode data; and
convert the second mode data into third mode data which has different at least one of bit width or format from the second mode data, and perform data computation on the third mode data;

or,
the dedicated DSP unit (420) is also arranged to:

convert third mode data returned after the computation into second mode data which has different at least one of bit width or format from the third mode data;
store the second mode data; and
convert the second mode data into first mode data which has different at least one of bit width or format from the second mode data, and send the first mode data to the hardware unit;
**characterised in that**
the bit width of the second mode data is greater than or equal to the bit width of the first mode data and less than the bit width of the third mode data; and
the bit width of the third mode data is calculated using a formula:

$$\text{the bit width of the third mode data} = \left\lceil \frac{\text{the bit width of the first mode data}}{8} \right\rceil * 8;$$

where $\lceil \ \rceil$ being rounded up to an integer.

2. The device according to claim 1, wherein
the dedicated DSP unit (420) is arranged to convert the first mode data into the second mode data which has different at least one of bit width and format from the first mode data, comprising:

the dedicated DSP unit (420) is arranged to convert the first mode data into the second mode data which has a different bit width from the first mode data; or,
the dedicated DSP unit (420) is arranged to convert the first mode data into the second mode data which has a different format from the first mode data; or,
the dedicated DSP unit (420) is arranged to convert the first mode data into the second mode data which has different bit width and format from the first mode data;
the dedicated DSP unit (420) is arranged to convert the second mode data into the first mode data which has different at least one of bit width and format from the second mode data, comprising:

the dedicated DSP unit (420) is arranged to convert the second mode data into the first mode data which has a different bit width from the second mode data; or,
the dedicated DSP unit (420) is arranged to convert the second mode data into the first mode data which has a different format from the second mode data; or,
the dedicated DSP unit (420) is arranged to convert the second mode data into the first mode data which has different bit width and format from the second mode data.

3. The device according to claim 1, wherein the dedicated DSP unit (420) is arranged to convert the second mode data into the third mode data which has different format from the second mode data, or the dedicated DSP unit (420) is arranged to convert the third mode data into the second mode data which has different format from the third mode data,

4. The device according to any one of claims 1, 2 and 3, wherein the dedicated DSP unit (420) comprises: a first data conversion unit (421), a second data conversion unit (423), an internal bus (424) and a data computation unit (425); wherein
the first data conversion unit (421) is arranged to receive the first mode data from the hardware unit and convert the first mode data into the second mode data which has different at least one of bit width and format from the first mode data; or is arranged to convert the second mode data into the first mode data which has different at least one of bit width and format from the second mode data;
the second data conversion unit (423) is arranged to receive the second mode data from the first data conversion unit, convert the second mode data into the third mode data and send the third mode data to the internal bus; or is arranged to receive the third mode data from the internal bus, convert the third mode data into the second mode data; the internal bus (424) is arranged to exchange the third mode data with the second data conversion unit and the data computation unit; and

the data computation unit (425) is arranged to receive the third mode data from the internal bus and perform the data computation on the third mode data, and is further arranged to return the computed third mode data to the internal bus.

5. The device according to claim 4, wherein the dedicated DSP unit further comprises a storage unit (422), and the storage unit (422) is arranged to store the second mode data converted from the first mode data; and
the second data conversion unit (423) is arranged to receive the second mode data from the first data conversion unit, or acquire the second mode data from the data storage unit.

6. A method for data interaction and conversion, which is implemented based on a dedicated Digital Signal Processor, DSP, and comprises:

(501) receiving first mode data from external of the dedicated DSP;
(502) converting the first mode data into second mode data which has different at least one of bit width or format from the first mode data;
(503) storing the second mode data; and
(504) converting the second mode data into third mode data which has different at least one of bit width or format from the second mode data, and (505) performing data computation on the third mode data;
or,
converting third mode data returned after computation into second mode data which has different at least one of bit width or format from the third mode data;
storing the second mode data;
converting the second mode data into first mode data which has different at least one of bit width or format from the second mode data; and
sending the first mode data to external of the dedicated DSP;
**characterised in that** the bit width of the second mode data is greater than or equal to the bit width of the first mode data and less than the bit width of the third mode data; and the bit width of the third mode data is calculated using a formula:

$$\text{the bit width of the third mode data} = \left\lceil \frac{\text{the bit width of the first mode data}}{8} \right\rceil * 8; \quad \text{where } \lceil \ \rceil \text{ being rounded up to an integer.}$$

7. The method according to claim 6, wherein
(502) converting the first mode data into the second mode data which has different at least one of bit width and format from the first mode data comprises:

converting the first mode data into the second mode data which has a different bit width from the first mode data; or,
converting the first mode data into the second mode data which has a different format from the first mode data; or,
converting the first mode data into a second mode data which has different bit width and format from the first mode data;
converting the second mode data into the first mode data which has different at least one of bit width and format from the second mode data comprises:
converting the second mode data into the first mode data which has a different bit width from the second mode data; or,
converting the second mode data into the first mode data which has a different format from the second mode data; or,
converting the second mode data into the first mode data which has different bit width and format from the second mode data.

8. The method according to claim 6, wherein
(504) converting the second mode data into the third mode data which has different at least one of bit width and format from the second mode data comprises:

converting the second mode data into the third mode data which has different bit width and format from the second mode data;

converting the third mode data into the second mode data which has different at least one of bit width and format from the third mode data comprises:

converting the third mode data into the second mode data which has different bit width and format from the third mode data.

**9.** A computer storage medium, having stored therein computer executable instructions for executing the method for data interaction and conversion according to any one of claims 6 to 8.

**Patentansprüche**

**1.** Vorrichtung zur Dateninteraktion und -umwandlung, die basierend auf einem dedizierten Digitalsignalprozessor, DSP, implementiert ist und umfasst:

eine Hardwareeinheit (410) und eine dedizierte DSP-Einheit (420), wobei

die Hardwareeinheit (410) eingerichtet ist, erste Modusdateninteraktion mit der dedizierten DSP-Einheit (420) durchzuführen; und

die dedizierte DSP-Einheit eingerichtet ist zum:

Empfangen erster Modusdaten von der Hardwareeinheit und Umwandeln der ersten Modusdaten in zweite Modusdaten, die sich mindestens in einem von Bitbreite und Format von den ersten Modusdaten unterscheiden;

Speichern der zweiten Modusdaten; und

Umwandeln der zweiten Modusdaten in dritte Modusdaten, die sich mindestens in einem von Bitbreite und Format von den zweiten Modusdaten unterscheiden, und Durchführen von Datenberechnung an den dritten Modusdaten;

oder,

die dedizierte DSP-Einheit (420) auch eingerichtet ist zum:

Umwandeln dritter Modusdaten, die nach der Berechnung zurückgegeben werden, in zweite Modusdaten, die sich mindestens in einem von Bitbreite oder Format von den dritten Modusdaten unterscheiden;

Speichern der zweiten Modusdaten; und

Umwandeln der zweiten Modusdaten in erste Modusdaten, die sich mindestens in einem von Bitbreite oder Format von den zweiten Modusdaten unterscheiden, und Senden der ersten Modusdaten an die Hardwareeinheit;

**dadurch gekennzeichnet, dass** die Bitbreite der zweiten Modusdaten größer als oder gleich der Bitbreite der ersten Modusdaten und kleiner als die Bitbreite der dritten Modusdaten ist; und

die Bitbreite der dritten Modusdaten unter Verwendung einer Formel berechnet wird:

$$\text{Bitbreite der dritten Modusdaten} = \left\lceil \frac{\text{Bitbreite der ersten Modusdaten}}{8} \right\rceil * 8,$$

wobei $\lceil \ \rceil$ auf eine Ganzzahl aufgerundet wird.

**2.** Vorrichtung nach Anspruch 1, wobei

die dedizierte DSP-Einheit (420) eingerichtet ist, die ersten Modusdaten in die zweiten Modusdaten umzuwandeln, die sich mindestens in einem von Bitbreite und Format von den ersten Modusdaten unterscheiden, umfassend:

die dedizierte DSP-Einheit (420) eingerichtet ist, die ersten Modusdaten in die zweiten Modusdaten umzuwandeln, die sich in Bitbreite von den ersten Modusdaten unterscheiden; oder

die dedizierte DSP-Einheit (420) eingerichtet ist, die ersten Modusdaten in die zweiten Modusdaten umzuwandeln, die sich in Format von den ersten Modusdaten unterscheiden; oder

die dedizierte DSP-Einheit (420) eingerichtet ist, die ersten Modusdaten in die zweiten Modusdaten umzuwandeln, die sich in Bitbreite und Format von den ersten Modusdaten unterscheiden;

die dedizierte DSP-Einheit (420) eingerichtet ist, die zweiten Modusdaten in die ersten Modusdaten umzuwandeln, die sich mindestens in einem von Bitbreite und Format von den zweiten Modusdaten unterscheiden, umfassend:

die dedizierte DSP-Einheit (420) eingerichtet ist, die zweiten Modusdaten in die ersten Modusdaten umzuwandeln, die sich in Bitbreite von den zweiten Modusdaten unterscheiden; oder
die dedizierte DSP-Einheit (420) eingerichtet ist, die zweiten Modusdaten in die ersten Modusdaten umzuwandeln, die sich im Format von den zweiten Modusdaten unterscheiden; oder
die dedizierte DSP-Einheit (420) eingerichtet ist, die zweiten Modusdaten in die ersten Modusdaten umzuwandeln, die sich in Bitbreite und Format von den zweiten Modusdaten unterscheiden.

3. Vorrichtung nach Anspruch 1, wobei
die dedizierte DSP-Einheit (420) eingerichtet ist, die zweiten Modusdaten in die dritten Modusdaten umzuwandeln, die sich in Format von den zweiten Modusdaten unterscheiden; oder
die dedizierte DSP-Einheit (420) eingerichtet ist, die dritten Modusdaten in die zweiten Modusdaten umzuwandeln, die sich in Format von den dritten Modusdaten unterscheiden.

4. Vorrichtung nach einem der Ansprüche 1, 2 und 3, wobei die dedizierte DSP-Einheit (420) umfasst: eine erste Datenumwandlungseinheit (421), eine zweite Datenumwandlungseinheit (423), einen internen Bus (424) und eine Datenberechnungseinheit (425); wobei
die erste Datenumwandlungseinheit (421) eingerichtet ist, die ersten Modusdaten von der Hardwareeinheit zu empfangen und die ersten Modusdaten in die zweiten Modusdaten umzuwandeln, die sich mindestens in einem von Bitbreite und Format von den ersten Modusdaten unterscheiden; oder eingerichtet ist, die zweiten Modusdaten in die ersten Modusdaten umzuwandeln, die sich mindestens in einem von Bitbreite und Format von den zweiten Modusdaten unterscheiden;
die zweite Modusumwandlungseinheit (423) eingerichtet ist, die zweiten Modusdaten von der ersten Datenumwandlungseinheit zu empfangen, die zweiten Modusdaten in die dritten Modusdaten umzuwandeln und die dritten Modusdaten an den internen Bus zu senden; oder eingerichtet ist, die dritten Modusdaten von dem internen Bus zu empfangen, die dritten Modusdaten in die zweiten Modusdaten umzuwandeln;
der interne Bus (424) eingerichtet ist, die dritten Modusdaten mit der zweiten Datenumwandlungseinheit und der Datenberechnungseinheit auszutauschen; und
die Datenberechnungseinheit (425) eingerichtet ist, die dritten Modusdaten von dem internen Bus zu empfangen und die Datenberechnung auf den dritten Modusdaten durchzuführen und weiter eingerichtet ist, die berechneten dritten Modusdaten an den internen Bus zurückzuschicken.

5. Vorrichtung nach Anspruch 4, wobei die dedizierte DSP-Einheit weiter eine Speichereinheit (422) umfasst und die Speichereinheit (422) eingerichtet ist, die zweiten Modusdaten zu speichern, die von den ersten Modusdaten umgewandelt sind; und
die zweite Datenumwandlungseinheit (423) eingerichtet ist, die zweiten Modusdaten von der ersten Datenumwandlungseinheit zu empfangen oder die zweiten Modusdaten von der Datenspeichereinheit zu erfassen.

6. Verfahren zur Dateninteraktion und -umwandlung, das basierend auf einem dedizierten Digitalsignalprozessor, DSP, implementiert ist und umfasst:

(501) Empfangen erster Modusdaten von außerhalb des dedizierten DSP;
(502) Umwandeln der ersten Modusdaten in zweite Modusdaten, die sich mindestens in einem von Bitbreite oder Format von den ersten Modusdaten unterscheiden;
(503) Speichern der zweiten Modusdaten; und
(504) Umwandeln der zweiten Modusdaten in dritte Modusdaten, die sich mindestens in einem von Bitbreite oder Format von den zweiten Modusdaten unterscheiden, und (505) Durchführen von Datenberechnung an den dritten Modusdaten;
oder
Umwandeln dritter Modusdaten, die nach Berechnung zurückgeschickt sind, in zweite Modusdaten, die sich mindestens in einem von Bitbreite oder Format von den dritten Modusdaten unterscheiden;
Speichern der zweiten Modusdaten;
Umwandeln der zweiten Modusdaten in erste Modusdaten, die sich mindestens in einem von Bitbreite oder Format von den zweiten Modusdaten unterscheiden; und
Senden der ersten Modusdaten an außerhalb des dedizierten DSP; **dadurch gekennzeichnet, dass** die Bitbreite der zweiten Modusdaten größer als oder gleich der Bitbreite der ersten Modusdaten und kleiner als die Bitbreite der dritten Modusdaten ist; und
die Bitbreite der dritten Modusdaten unter Verwendung einer Formel berechnet ist:

$$\text{Bitbreite der dritten Modusdaten} = \left\lceil \frac{\text{Bitbreite der ersten Modusdaten}}{8} \right\rceil * 8,$$

wobei ⌈ ⌉ auf eine Ganzzahl aufgerundet wird.

**7.** Verfahren nach Anspruch 6, wobei (502) Umwandeln der ersten Modusdaten in die zweiten Modusdaten, die sich mindestens in einem von Bitbreite und Format von den ersten Modusdaten unterscheiden, umfasst:

Umwandeln der ersten Modusdaten in die zweiten Modusdaten, die sich in Bitbreite von den ersten Modusdaten unterscheiden; oder
Umwandeln der ersten Modusdaten in die zweiten Modusdaten, die sich in Format von den ersten Modusdaten unterscheiden; oder
Umwandeln der ersten Modusdaten in zweite Modusdaten, die sich in Bitbreite und Format von den ersten Modusdaten unterscheiden;
Umwandeln der zweiten Modusdaten in die ersten Modusdaten, die sich mindestens in einem von Bitbreite und Format von den zweiten Modusdaten unterscheiden; umfasst:

Umwandeln der zweiten Modusdaten in die ersten Modusdaten, die sich in Bitbreite von den zweiten Modusdaten unterscheiden; oder
Umwandeln der zweiten Modusdaten in die ersten Modusdaten, die sich in Format von den zweiten Modusdaten unterscheiden; oder
Umwandeln der zweiten Modusdaten in die ersten Modusdaten, die sich in Bitbreite und Format von den zweiten Modusdaten unterscheiden.

**8.** Verfahren nach Anspruch 6, wobei
(504) Umwandeln der zweiten Modusdaten in die dritten Modusdaten, die sich mindestens in einem von Bitbreite und Format von den zweiten Modusdaten unterscheiden, umfasst:

Umwandeln der zweiten Modusdaten in die dritten Modusdaten, die sich in Bitbreite und Format von den zweiten Modusdaten unterscheiden;
Umwandeln der dritten Modusdaten in die zweiten Modusdaten, die sich mindestens in einem von Bitbreite und Format von den dritten Modusdaten unterscheiden, umfasst:
Umwandeln der dritten Modusdaten in die zweiten Modusdaten, die sich in Bitbreite und Format von den dritten Modusdaten unterscheiden.

**9.** Computerspeichermedium, das computerausführbare Anweisungen zum Ausführen des Verfahrens zur Dateninteraktion und -umwandlung nach einem der Ansprüche 6 bis 8 darin gespeichert aufweist.

**Revendications**

**1.** Dispositif d'interaction et de conversion de données, qui est implémenté sur la base d'un processeur de signal numérique, DSP, dédié et comprend : une unité matérielle (410) et une unité DSP dédiée (420), dans lequel l'unité matérielle (410) est agencée pour effectuer une interaction de données de premier mode avec l'unité DSP dédiée (420) ; et
l'unité DSP dédiée est agencée pour :

recevoir des données de premier mode depuis l'unité matérielle, et convertir les données de premier mode en données de deuxième mode qui présentent au moins un d'une largeur de bit ou d'un format différent des données de premier mode ;
stocker les données de deuxième mode ; et
convertir les données de deuxième mode en données de troisième mode qui présentent au moins un d'une largeur de bit ou d'un format différent des données de deuxième mode, et effectuer un calcul de données sur les données de troisième mode ;
ou,
l'unité DSP dédiée (420) est également agencée pour :

convertir des données de troisième mode renvoyées après le calcul en données de deuxième mode qui présentent au moins un d'une largeur de bit ou d'un format différent des données de troisième mode ;
stocker les données de deuxième mode ; et
convertir les données de deuxième mode en données de premier mode qui présentent au moins un d'une largeur de bit ou d'un format différent des données de deuxième mode, et envoyer les données de premier mode à l'unité matérielle ;
**caractérisé en ce que**
la largeur de bit des données de deuxième mode est supérieure ou égale à la largeur de bit des données de premier mode et inférieure à la largeur de bit des données de troisième mode ; et
la largeur de bit des données de troisième mode est calculée à l'aide d'une formule : la largeur de bit des

$$\text{données de troisième mode} = \left\lceil \frac{\text{la largeur de bit des données de premier mode}}{8} \right\rceil * 8 \; ; \text{ où } \lceil \rceil \text{ étant arrondi}$$

à un entier supérieur.

2. Dispositif selon la revendication 1, dans lequel
l'unité DSP dédiée (420) est agencée pour convertir les données de premier mode en les données de deuxième mode qui présentent au moins un d'une largeur de bit et d'un format différent des données de premier mode, comprenant :

l'unité DSP dédiée (420) est agencée pour convertir les données de premier mode en les données de deuxième mode qui présentent une largeur de bit différente des données de premier mode ; ou,
l'unité DSP dédiée (420) est agencée pour convertir les données de premier mode en les données de deuxième mode qui présentent un format différent des données de premier mode ; ou,
l'unité DSP dédiée (420) est agencée pour convertir les données de premier mode en les données de deuxième mode qui présentent une largeur de bit et un format différents des données de premier mode ;
l'unité DSP dédiée (420) est agencée pour convertir les données de deuxième mode en les données de premier mode qui présentent au moins un d'une largeur de bit et d'un format différent des données de deuxième mode, comprenant :

l'unité DSP dédiée (420) est agencée pour convertir les données de deuxième mode en les données de premier mode qui présentent une largeur de bit différente des données de deuxième mode ; ou,
l'unité DSP dédiée (420) est agencée pour convertir les données de deuxième mode en les données de premier mode qui présentent un format différent des données de deuxième mode ; ou,
l'unité DSP dédiée (420) est agencée pour convertir les données de deuxième mode en les données de premier mode qui présentent une largeur de bit et un format différents des données de deuxième mode.

3. Dispositif selon la revendication 1, dans lequel
l'unité DSP dédiée (420) est agencée pour convertir les données de deuxième mode en les données de troisième mode qui présentent un format différent des données de deuxième mode, ou
l'unité DSP dédiée (420) est agencée pour convertir les données de troisième mode en les données de deuxième mode qui présentent un format différent des données de troisième mode.

4. Dispositif selon l'une quelconque des revendications 1, 2 et 3, dans lequel l'unité DSP dédiée (420) comprend : une première unité de conversion de données (421), une seconde unité de conversion de données (423), un bus interne (424) et une unité de calcul de données (425) ; dans lequel
la première unité de conversion de données (421) est agencée pour recevoir les données de premier mode depuis l'unité matérielle et convertir les données de premier mode en les données de deuxième mode qui présentent au moins un d'une largeur de bit et d'un format différent des données de premier mode ; ou est agencée pour convertir les données de deuxième mode en les données de premier mode qui présentent au moins un d'une largeur de bit et d'un format différent des données de deuxième mode ;
la deuxième unité de conversion de données (423) est agencée pour recevoir les données de deuxième mode depuis la première unité de conversion de données, convertir les données de deuxième mode en les données de troisième mode et envoyer les données de troisième mode au bus interne ; ou est agencée pour recevoir les données de troisième mode depuis le bus interne, convertir les données de troisième mode en les données de deuxième mode ;
le bus interne (424) est agencé pour échanger les données de troisième mode avec la seconde unité de conversion de données et l'unité de calcul de données ; et

l'unité de calcul de données (425) est agencée pour recevoir les données de troisième mode depuis le bus interne et effectuer le calcul de données sur les données de troisième mode, et est en outre agencée pour renvoyer les données de troisième mode calculées au bus interne.

5. Dispositif selon la revendication 4, dans lequel l'unité DSP dédiée comprend en outre une unité de stockage (422), et l'unité de stockage (422) est agencée pour stocker les données de deuxième mode converties à partir des données de premier mode ; et
la seconde unité de conversion de données (423) est agencée pour recevoir les données de deuxième mode depuis la première unité de conversion de données, ou acquérir les données de deuxième mode depuis l'unité de stockage de données.

6. Procédé d'interaction et de conversion de données, qui est implémenté sur la base d'un processeur de signal numérique, DSP, dédié et comprend :

(501) recevoir des données de premier mode depuis l'extérieur du DSP dédié ;
(502) convertir les données de premier mode en données de deuxième mode qui présentent au moins un d'une largeur de bit ou d'un format différent des données de premier mode ;
(503) stocker les données de deuxième mode ; et
(504) convertir les données de deuxième mode en données de troisième mode qui présentent au moins un d'une largeur de bit ou d'un format différent des données de deuxième mode, et (505) effectuer un calcul de données sur les données de troisième mode ;
ou,
convertir des données de troisième mode renvoyées après le calcul en données de deuxième mode qui présentent au moins un d'une largeur de bit ou d'un format différent des données de troisième mode ;
stocker les données de deuxième mode ;
convertir les données de deuxième mode en données de premier mode qui présentent au moins un d'une largeur de bit ou d'un format différent des données de deuxième mode ; et
envoyer les données de premier mode à l'extérieur du DSP dédié **caractérisé en ce que**
la largeur de bit des données de deuxième mode est supérieure ou égale à la largeur de bit des données de premier mode et inférieure à la largeur de bit des données de troisième mode ; et
la largeur de bit des données de troisième mode est calculée à l'aide d'une formule : la largeur de bit des données de troisième mode $= \left\lceil \dfrac{\text{la largeur de bit des données de premier mode}}{8} \right\rceil * 8$ ; où $\lceil \ \rceil$ étant arrondi a un entier supérieur.

7. Procédé selon la revendication 6, dans lequel
la conversion (502) des données de premier mode en les données de deuxième mode qui présentent au moins un d'une largeur de bit et d'un format différent des données de premier mode comprend :

convertir les données de premier mode en les données de deuxième mode qui présentent une largeur de bit différente des données de premier mode ; ou,
convertir les données de premier mode en les données de deuxième mode qui présentent un format différent des données de premier mode ; ou,
convertir les données de premier mode en les données de deuxième mode qui présentent une largeur de bit et un format différents des données de premier mode ;
la conversion de données de deuxième mode en les données de premier mode qui présentent au moins un d'une largeur de bit et d'un format différent des données de deuxième mode comprend :

convertir les données de deuxième mode en les données de premier mode qui présentent une largeur de bit différente des données de deuxième mode ; ou,
convertir les données de deuxième mode en les données de premier mode qui présentent un format différent des données de deuxième mode ; ou,
convertir les données de deuxième mode en les données de premier mode qui présentent une largeur de bit et un format différents des données de deuxième mode.

8. Procédé selon la revendication 6, dans lequel
(504) la conversion des données de deuxième mode en les données de troisième mode qui présentent au moins un d'une largeur de bit et d'un format différent des données de deuxième mode comprend :

> convertir les données de deuxième mode en les données de troisième mode qui présentent une largeur de bit et un format différents des données de deuxième mode ;
> la conversion des données de troisième mode en les données de deuxième mode qui présentent au moins un d'une largeur de bit et d'un format différent des données de troisième mode comprend :
> convertir les données de troisième mode en les données de deuxième mode qui présentent une largeur de bit et un format différents des données de troisième mode.

9. Support de stockage informatique, dans lequel sont stockées des instructions exécutables par ordinateur pour exécuter le procédé d'interaction et de conversion de données selon l'une quelconque des revendications 6 à 8.

FIG. 1

FIG. 2

Data computation
unit                    350

340
Internal bus

310                        330
First data              Second data
conversion unit         conversion unit

Data storage unit

DSP              320

**FIG. 3**

410

Hardware
unit

Data computation
unit                    425

424
Internal bus

421                        423
First data              Second data
conversion unit         conversion unit

Data storage unit

420

DSP unit         422

**FIG. 4**

receiving first mode data from the external of the
dedicated DSP | 501

converting the received first mode data into second
mode data which has different at least one of bit width
and format from the first mode data | 502

storing the second mode data | 503

converting the second mode data into third mode data
which has different at least one of bit width and format
from the second mode data | 504

performing data computation on the third mode data | 505

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HASELMAN M et al.** A Comparison of Floating Point and Logarithmic Number Systems for FPGAs. *FIELD-PROGRAMMABLE CUSTOM COMPUTIGN MACHINES,* 2005